# EUROPÄISCHE PATENTANMELDUNG

(11) **EP 1 350 654 A1**
(43) Veröffentlichungstag der Anmeldung: **08.10.2003**
(21) Anmeldenummer: 03450042.1
(22) Anmeldetag: 18.02.2003
(51) Int. Cl.: B60K 15/03, B60P 3/24

(54) **Fahrzeugtank**

(30) Priorität: 21.03.2002 AT 4362002
(71) Anmelder: Alutech Gesellschaft m.b.H., 5651 Lend (AT)
(72) Erfinder: Gerlach, Karl-Heinz, Ing., 5622 Goldegg (AT); Hake, Till, Dipl.-Ing., 5620 Schwarzach (AT)
(74) Vertreter: Weiser, Andreas, Dr.

(57) **Zusammenfassung**

Fahrzeugtank mit zumindest zwei Kammern (3, 4) zur getrennten Aufbewahrung von Flüssigkeiten, mit einem allgemeinzylindrischen Hohlkörper (1), der von zumindest einer im wesentlichen normal zu seiner Längsachse liegenden Trennwand (2) in die genannten Kammern (3, 4) unterteilt ist, wobei die Trennwand (2) an ihrem Umfang mit einem in Richtung der Längsachse umgebogenen Rand (10) versehen ist, welcher einen mittigen, in Umfangsrichtung verlaufenden, nach außen vorspringenden Wulst (11) aufweist, und daß der Hohlkörper (1) aus einzelnen Zylindersegmenten (7, 8) gebildet ist, welche unter Zwischenschaltung jeweils einer genannten Trennwand (2) zusammengesetzt sind, wobei die Zylindersegmente (7, 8) mit den Flanken (12, 13) des Wulstes verschweißt sind.

## Beschreibung

Die vorliegende Erfindung betrifft einen Fahrzeugtank mit zumindest zwei Kammern zur getrennten Aufbewahrung von Flüssigkeiten, mit einem allgemein-zylindrischen Hohlkörper, der von zumindest einer im wesentlichen normal zu seiner Längsachse liegenden Trennwand in die genannten Kammern unterteilt ist.

Fahrzeugtanks mit getrennten Kammern für verschiedene Flüssigkeiten werden beispielsweise bei Nutzfahrzeugen verwendet, um einerseits Kraftstoff, anderseits z.B. Katalysatorrezyklierflüssigkeit, wie Harnstoff, mit geringem Platzbedarf aufzunehmen. Bei den bekannten Zweikammertanks wird die Trennwand in Axialrichtung in den Hohlkörper eingeschoben und ihr Rand mit der Innenwand des Hohlkörpers verpreßt und verschweißt. Das Herstellen einer solchen Schweißnaht im Inneren eines Hohlkörpers ist ausgesprochen schwierig. Wenn der Tank durch Verschließen des Hohlkörpers einmal geschlossen ist, besteht keine Möglichkeit mehr, die Trennwand bei Auftreten von Undichtigkeiten nachzuschweißen. Darüber hinaus ist das Prüfen des Tanks auf Dichtheit aufwendig, da beide Kammern getrennt geprüft werden müssen.

Aus der DE 346 533 ist ein Zweikammer-Behälter für einen Tankwagen bekannt, wobei jede Behälterkammer durch eine eigene Trennwand abgeschlossen ist, die im zusammengebauten Zustand aneinander anliegen. Bei der Fertigung wird zunächst jede Trennwand gesondert mit einer Behälterhälfte verschweißt, und anschließend werden nach außen umgebogene Endflansche der Trennwände miteinander verschweißt. Der Einsatz von zwei Trennwänden und drei Schweißnähten ist kostspielig und zeitraubend. Die exakte Aufbringung der dritten Schweißnaht an der Schnittstelle der beiden nach außen umgebogenen Endflansche ist schwierig und erzeugt dort einen Überstand, welcher nicht nur platzraubend und unschön, sondern auch korrosions- und beschädigungsanfällig ist.

Die Erfindung setzt sich zum Ziel, einen Fahrzeugtank der einleitend genannten Art zu schaffen, der besonders wirtschaftlich gefertigt werden kann, unanfällig gegenüber Beschädigungen und Korrosion ist, einfach auf Dichtheit überprüft werden kann und bei dem auch im geschlossenen Zustand die Möglichkeit einer Ausbesserung der Abdichtung der Trennwand mit dem Hohlkörper besteht.

Dieses Ziel wird gemäß der Erfindung dadurch erreicht, daß die Trennwand an ihrem Umfang mit einem in Richtung der Längsachse umgebogenen Rand versehen ist, welcher einen mittigen, in Umfangsrichtung verlaufenden, nach außen vorspringenden Wulst aufweist, und daß der Hohlkörper aus einzelnen Zylindersegmenten gebildet ist, welche unter Zwischenschaltung jeweils einer genannten Trennwand zusammengesetzt sind, wobei die Zylindersegmente mit den Flanken des Wulstes verschweißt sind.

Auf diese Weise kann das Verschweißen der Trennwand von außen durchgeführt werden, was wesentlich geringere Anforderungen an die Schweißausrüstung stellt. Es sind nur zwei Schweißnähte erforderlich, und diese sind durch den vorspringenden Wulst gegenüber Beschädigungen und Korrosion geschützt. Die Schweißnähte können bei geschlossenem Tank von außen durch Sichtprüfung überprüft werden. Bei Undichtigkeiten können die Schweißnähte einfach von außen nachgeschweißt werden, ohne daß der Tank zerlegt werden muß. Darüberhinaus ermöglicht die Erfindung auf einfache Weise die modulare Fertigung von Tanks mit mehr als zwei Kammern durch Aufsetzen jeweils einer weiteren Trennwand und eines weiteren Zylindersegmentes.

Eine bevorzugte Ausführungsform der Erfindung zeichnet sich dadurch aus, daß der Wulst durch Sicken, Tiefziehen od.dgl. gefertigt ist, was eine besonders einfache und wirtschaftliche Serienfertigung ermöglicht.

Dabei ist es besonders günstig, wenn die Zylindersegmente und die Trennwand aus Aluminium gefertigt sind. Dies vereinfacht die Fertigung, verringert das Gewicht und erhöht die Korrosionsbeständigkeit noch weiter.

Die Erfindung wird nachstehend anhand eines in den Zeichnungen dargestellten Ausführungsbeispieles näher erläutert. In den Zeichnungen zeigt
Fig. 1 den erfindungsgemäßen Fahrzeugtank in einem Längsschnitt;
Fig. 2 in einem Querschnitt; und
Fig. 3 das Detail A von Fig. 1 in vergrößertem Maßstab.

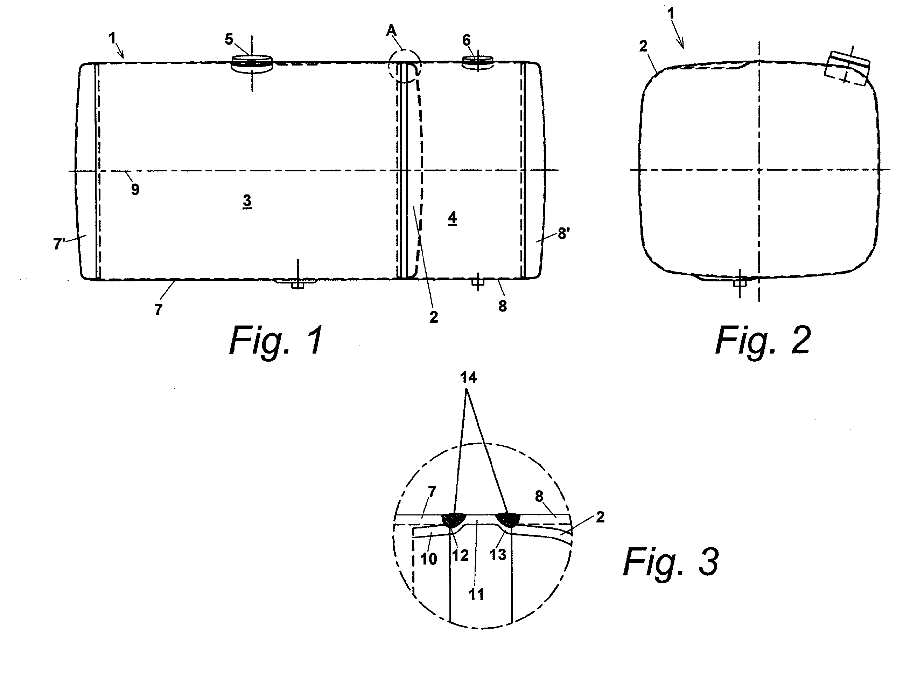

In den Fig. 1 und 2 ist ein Fahrzeugtank in Form eines Hohlkörpers 1 für ein Nutzfahrzeug dargestellt, welcher zwei durch eine Trennwand 2 getrennte Kammern 3, 4 für unterschiedliche Flüssigkeiten enthält. Jede der Kammern 3, 4 ist mit einem eigenen Einfüllstutzen 5, 6 versehen. Die Kammer 3 enthält beispielsweise Dieselkraftstoff, und die Kammer 4 Harnstoff aus einer Katalysator-Rezyklieranlage.

Der Hohlkörper 1 setzt sich aus zwei einzelnen Zylindersegmenten 7, 8 zusammen, welche unter Zwischenschaltung der Trennwand 2 verbunden sind. Die Zylindersegmente 7, 8 sind jeweils an ihren der Trennwand 2 abgewandten Enden mit einer einstückig ausgebildeten oder angeschweißten Stirnwand 7', 8' versehen, um den Hohlkörper 1 abzuschließen. Die Schnittstelle mit der Trennwand 2 ist in Fig. 3 ausführlicher gezeigt.

Gemäß Fig. 3 ist die Trennwand 2 an ihrem Umfang mit einem in Richtung der Längsachse 9 des Hohlkörpers 1 umgebogenen Rand 10 versehen, welche einen mittigen, in Umfangsrichtung verlaufenden und nach außen vorspringenden Wulst 11 aufweist. Die Zylindersegmente 7, 8 schließen von beiden Seiten an die Flanken 12, 13 des Wulstes 11 an und sind mit diesen von außen bei 14 verschweißt.

Der Hohlkörper 1 mit den Zylindersegmenten 7, 8 und die Trennwand 2 sind bevorzugt aus Aluminium gefertigt, auch wenn dies nicht zwingend ist. Der Wulst 11 kann auf beliebige Art und Weise gefertigt werden, z.B. durch Mit-Gießen, Prägen usw., bevorzugt aber durch Sicken, Tiefziehen od.dgl.

Die Erfindung ist selbstverständlich nicht auf das dargestellte Ausführungsbeispiel beschränkt. Beispielsweise kann der Fahrzeugtank mehr als zwei Kammern aufweisen, in welchem Fall eine entsprechende Anzahl von Zylindersegmenten und zwischengeschalteten Trennwänden vorgesehen wird. Der Querschnitt des Fahrzeugstanks (Fig. 2) ist beliebig, z.B. rund, rechteckig, quadratisch, oval, quadratisch-abgerundet wie dargestellt usw.; alle diese Varianten fallen unter den hier verwendeten Ausdruck "allgemein-zylindrisch". In einer beispielhaften Ausführungsform beträgt der Querschnitt des Fahrzeugstanks 700 x 700 mm.

## Patentansprüche

1. Fahrzeugtank mit zumindest zwei Kammern (3, 4) zur getrennten Aufbewahrung von Flüssigkeiten, mit einem allgemeinzylindrischen Hohlkörper (1), der von zumindest einer im wesentlichen normal zu seiner Längsachse liegenden Trennwand (2) in die genannten Kammern (3, 4) unterteilt ist, **dadurch gekennzeichnet, daß** die Trennwand (2) an ihrem Umfang mit einem in Richtung der Längsachse umgebogenen Rand (10) versehen ist, welcher einen mittigen, in Umfangsrichtung verlaufenden, nach außen vorspringenden Wulst (11) aufweist, und daß der Hohlkörper (1) aus einzelnen Zylindersegmenten (7, 8) gebildet ist, welche unter Zwischenschaltung jeweils einer genannten Trennwand (2) zusammengesetzt sind, wobei die Zylindersegmente (7, 8) mit den Flanken (12, 13) des Wulstes verschweißt sind.

2. Fahrzeugtank nach Anspruch 1, **dadurch gekennzeichnet, daß** der Wulst (11) durch Sicken, Tiefziehen od.dgl. gefertigt ist.

3. Fahrzeugtank nach Anspruch 1 oder 2, **dadurch gekennzeichnet, daß** die Zylindersegmente (7, 8) und die Trennwand (2) aus Aluminium gefertigt sind.
